## Europäisches Patentamt

## European Patent Office

## Office européen des brevets

(19)

(11) Veröffentlichungsnummer: **0 158 004**
**B1**

(12) **EUROPÄISCHE PATENTSCHRIFT**

(45) Veröffentlichungstag der Patentschrift:
18.05.88

(51) Int. Cl.⁴: **F 16 D 25/12, B 60 K 23/02**

(21) Anmeldenummer: **85100269.1**

(22) Anmeldetag: **12.01.85**

(54) Selbstnachstellende Servobetätigung für eine Kupplung.

(30) Priorität: **13.04.84 DE 3413983**

(43) Veröffentlichungstag der Anmeldung:
**16.10.85 Patentblatt 85/42**

(45) Bekanntmachung des Hinweises auf die Patenterteilung:
**18.05.88 Patentblatt 88/20**

(84) Benannte Vertragsstaaten:
**DE FR GB SE**

(56) Entgegenhaltungen:
**AT-B-318 404**
**DE-B-1 143 365**
**DE-B-2 124 948**
**DE-C-895 921**

(73) Patentinhaber: **WABCO Westinghouse Fahrzeugbremsen GmbH, Am Lindener Hafen 21 Postfach 91 12 80, D-3000 Hannover 91 (DE)**

(72) Erfinder: **Klatt, Alfred, Dannhorstweg 25, D-3101 Wathlingen (DE)**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

EP 0 158 004 B1

## Beschreibung

Die Erfindung bezieht sich auf eine selbstnachstellende Servobetätigung für eine Kupplung gemäß dem Oberbegriff des Patentanspruchs 1.

Fremdkraftbetätigte Kupplungen werden insbesondere in Nutzfahrzeugen eingesetzt. Wegen der zu überwindenden hohen Kräfte beim Ausrücken der Kupplung ist hier eine Servobetätigung zweckmäßig. Dabei sind die folgenden technischen Problems zu beachten. Bei pneumatisch betätigten Kupplungen ist der Einbauraum direkt an der Kupplungsglocke meist recht begrenzt. Deshalb sind die bei üblichen pneumatischen Drücken erforderlichen Kolbenflächen des Servozylinders an dieser Stelle nicht mehr unterzubringen.

Weiter unterliegt die Kupplung einem ständigen Verschleiß, wodurch sich die Betätigungswege und die Lage des Eingriffspunktes stetig verändern. Unter ungünstigen Verhältnissen können hierdurch große Schadräume entstehen.

Um dies zu verhindern, sind automatische Nachstellvorrichtungen bekannt, die entweder mit einer reibschlüssigen, mit dem Kupplungsverschleiß verschiebbaren Muffe arbeiten (DE-A-30 09 196) oder einen hydraulischen Verschleißausgleich aufweisen (DE-C-21 24 948). Die genannte hydraulische Vorrichtung ist relativ aufwendig konstruiert.

Schließlich muß die Kupplung sehr schnell betätigt werden, um die Schaltpausen möglichst klein zu halten. Die gewünschte schnelle Betätigung führt jedoch, insbesondere bei druckluftbetätigten Kupplungen, zum Überschwingen des Servozylinders und damit zu einem "ruppigen Kuppeln". Dieses Verhalten kommt deshalb zustande, weil Druckluft wie eine Feder elastisch wirkt, und weil weiter die erheblichen Massen des Kolbens und der Kupplungsscheibe bewegt werden müssen. Die Masse dieser Teile verhindert ein plötzliches Stoppen der Betätigungselemente. Es ist weiter eine selbstnachstellende Servobetätigung für eine Kraftfahrzeug-Kupplung bekannt (AT-B-318 404), von welcher die Anmeldung ausgeht, bei der eine extern angeordnete, von einer Elektronik über ein Magnetventil einschaltbare Drossel zur Verlangsamung der Kupplungsbewegung beim Einkuppeln verwendet wird. Hierzu wird der Elektronik über elektrische Endschalter die jeweilige Stellung eines Steuerventils mitgeteilt.

Der Erfindung liegt die Aufgabe zugrunde, eine selbstnachstellende Servobetätigung für eine Kupplung der eingangs genannten Art anzugeben, welche auf besonders einfache Weise eine automatische Abbremsung im Einkuppelpunkt ermöglicht.

Diese Aufgabe wird durch die in Patentanspruch 1 angegebene Merkmale gelöst. Die Unteransprüche enthalten zweckmäßige Weiterbildungen der Erfindung.

Die Erfindung wird im folgenden anhand einer Zeichnung näher erläutert. Die Zeichnung zeigt in

Figur 1 ein schematisches Blockschaltbild einer erfindungsgemäßen Kupplungs-Servobetätigung und in

Figur 2 eine Ventilanordnung zur Entlüftung des Servozylinders.

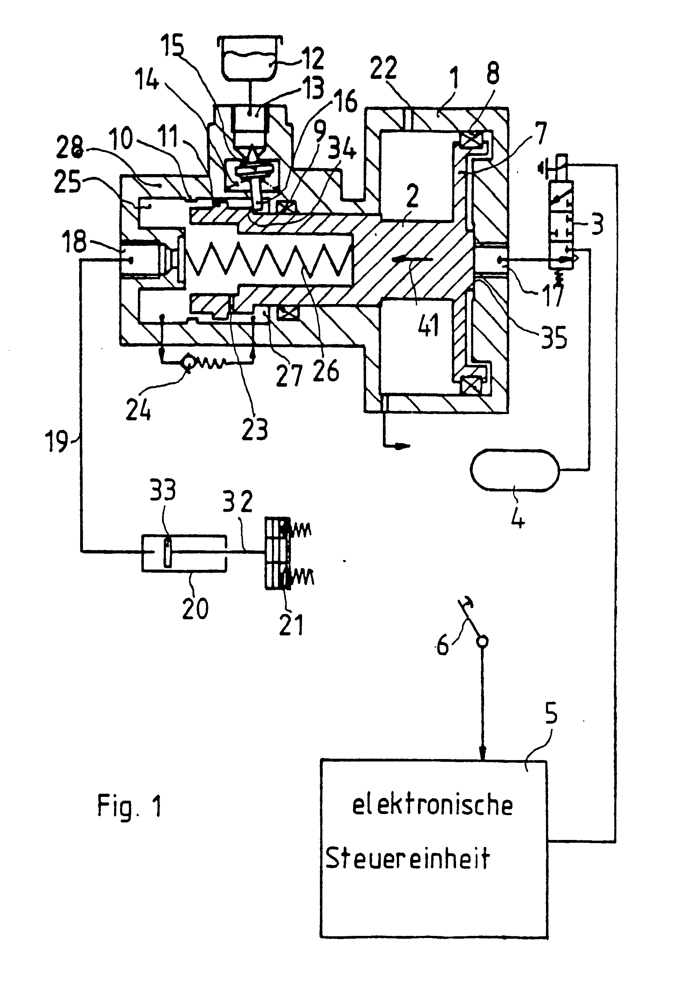

In Figur 1 ist mit 5 eine elektronische Steuereinheit zur Ansteuerung eines Gebers 1 über ein Wegeventil 3 dargestellt. Die Steuereinheit 5 gibt Schaltsignale für eine Kupplung 21 ab. Diese Schaltsignale werden entweder in einer (nicht dargestellten) Logik aus den Fahrzeugdaten, wie Geschwindigkeit, Motordrehzahl usw. ermittelt oder durch ein an die Steuereinheit 5 angeschlossenes Kupplungspedal 6 erzeugt.

Mit Hilfe des Wegeventils 3, das in die Stellungen Druckaufbau, Druckhalten, Druckabbau schaltbar ist, läßt sich Druckluft aus einem Vorrat 4 über einen Anschluß 17 dem Geber 1 zuführen. Die Druckluft wirkt auf einen Kolben 7, der mit einer Dichtung 8 gegenüber der Zylinderwand abgedichtet ist. Der rückwärtige Raum des Kolbens 7 ist über eine Atmungs-Bohrung 22 entlüftet.

Der Kolben 7 dient zum Antrieb eines Hauptzylinderkolbens 2. Dieser ist am linken Ende mit einer zentralen Bohrung versehen, in welcher eine Druckfeder 26 angeordnet ist, die sich gegen die Stirnwand eines Hauptzylinders 28 abstützt. Der Hauptzylinder 28 ist mit Hydraulik-Flüssigkeit (Räume 25 und 27) gefüllt. Zur Abdichtung des pneumatischen Teils gegenüber dem hydraulischen Teil dient eine Dichtung 9.

Der Hauptzylinder 28 ist mit einer Einrichtung zur Nachspeisung von Hydraulikflüssigkeit ausgerüstet. Diese besteht aus einem Ausgleichsbehälter 12, der an einen Anschluß 13 des Hauptzylinders angeschlossen ist. Der Anschluß 13 ist gegenüber dem Raum 27 durch ein Ventil 15, das mit einer Feder 14 belastet ist, abschließbar.

Der Hauptzylinderkolben 2 ist mit einer ringförmigen Wulst 11 versehen. Entsprechend ist die Innenseite des Hauptzylinders 28 mit einer ringförmigen Wulst 10 ausgerüstet. In der übereinanderliegenden Stellung der bei den Wülste 10, 11 bilden diese einen nahezu dichten Abschluß. Der Hauptzylinderkolben 2 ist weiter mit einer Drosselbohrung 23 versehen, welche rechts vom Wulst 11 angeordnet ist und den Raum 27 mit dem Raum 25 verbindet. Eine weitere Verbindung der beiden Räume 27 und 25 erfolgt über ein Rückschlagventil 24, das so gerichtet ist, daß ein Durchfluß der Hydraulikflüssigkeit vom Raum 25 in den Raum 27 möglich ist, in der Gegenrichtung jedoch gesperrt ist.

Der Hauptzylinder 28 ist über einen Anschluß 18 und eine Leitung 19 mit einem hydraulischen Nehmerzylinder 20 verbunden. Dieser ist unmittelbar an der Kupplung 21 angeordnet. Der Kolben 33 des Nehmerzylinders 20 ist über eine Stange 32 mit dem beweglichen Teil der Kupplung 21 verbunden.

Im folgenden wird die Wirkungsweise der dargestellten Servobetätigung näher erläutert. Die Anordnung ist in der eingekuppelten Stellung der Kupplung 21 gezeichnet.

Zum Auskuppeln wird ein Signal von der elektronischen Steuereinheit 5 erzeugt. Dieses bewirkt eine Verstellung des Wegeventils 3 in die belüftende Stellung. Durch die Druckluft im Vorratsbehälter 4 wird der Kolben 7 und somit der Hauptzylinderkolben 2 nach links in Richtung des Pfeiles 41 bewegt. Dabei spannt sich die Druckfeder 26. Die Bewegung des Hauptzylinderkolbens 2 wird nach links durch die Wülste 10, 11 nicht behindert, da durch das Rückschlagventil 24 ein Druckausgleich zwischen den Räumen 25 und 27 möglich ist. Der entstehende Hydraulik-Druck wird über die Leitung 19 dem Nehmerzylinder 20 zugeführt. Dieser bewegt den beweglichen Teil der Kupplung 21 nach rechts, so daß diese in den ausgekuppelten Zustand übergeführt wird.

Ein Entweichen der Hydraulikflüssigkeit aus dem Raum 27 in den Ausgleichsbehälter 12 wird durch das geschlossene Ventil 15 verhindert.

Zum Wiedereinkuppeln wird das Wegeventil 3 durch die Steuereinheit 5 auf Entlüften umgeschaltet. Hierdurch bewegt sich der Hauptkolben 2 infolge der Kraft der Druckfeder 26 und der Kupplungsrückstellkraft nach rechts. Entsprechend bewegt sich der Kolben 33 des Nehmerzylinders 20 nach links.

Sobald sich die Reibbeläge der Kupplung 21 berühren, wird die schnelle Bewegung des Hauptzylinderkolbens 2 infolge der Wülste 10, 11 stark abgebremst. Das nunmehr im Druckraum 27 eingeschlossene Hydrauliköl kann nur über die Drosselbohrung 23 entweichen.

Sobald der Wulst 11 am Hauptzylinderkolben 2 den Wulst 10 am Hauptzylinder 28 überfahren hat, ist die Bremswirkung der Anordnung aufgehoben. In diesem Moment ist auch der Einkuppelvorgang der Kupplung 21 beendet, und somit der gezeichnete eingekuppelte Zustand wieder erreicht. Schnelle Bewegungen und damit Schwingungen im Einkuppelbereich werden so verhindert.

Die Lage der Wülste 10 und 11 und damit der auf kleine Einkuppelgeschwindigkeiten begrenzte Einkuppelbereich ist auf die Wegverhältnisse der Kupplung 21 abgestimmt.

In der rechten Endstellung des Hauptzylinderkolbens 2 legt sich eine Kante 34 des Kolbens gegen einen Stift 16 des Ventils 15. Hierdurch wird dieses aus der senkrechten Stellung gekippt und ermöglicht so ein Nachfließen von Hydraulikflüssigkeit aus dem Ausgleichsbehälter 12 in den Raum 27. Hierdurch wird ein Verlust von Hydrauliköl infolge von Undichtigkeiten ausgeglichen.

Mit zunehmendem Verschleiß der Beläge der Kupplung 21 wandert die Endstellung des Kolbens 33 des Nehmerzylinders 20 in der eingekuppelten Stellung der Kupplung 21 nach links. Hierdurch wird das sich im Nehmerzylinder 20 und Hauptzylinder 28 befindende Volumen an Hydraulikflüssigkeit mit zunehmendem Verschleiß geringer. Diese jeweils bei Kupplungsverschleiß auftretende kleine Menge Hydraulikflüssigkeit wird in der rechten Endstellung des Hauptzylinderkolbens 2 über das geöffnete Ventil 16 in den Vorratsbehälter 12 gedrückt. Hierdurch ist ein automatischer Verschleißausgleich realisiert. Es wird weiter erreicht, daß der Hub des Hauptzylinderkolbens 2 nur den regulären Kupplungshub plus einer Sicherungszugabe ohne Nachstellung beinhalten muß. Der Einkuppelpunkt befindet sich somit immer an der gleichen Hubstelle.

Im eingekuppelten Zustand liegt das rechte Ende des Hauptzylinderkolbens 2 stets an einem Anschlag 35 des Gehäuses des Gebers 1 an. Hieraus folgt, daß während eines Einkuppelvorganges die Bremswirkung der Wülste 10, 11 stets genau im Berührpunkt der Kupplung 21 einsetzt, und zwar unabhängig von der Abnutzung der Kupplungsbeläge. Durch die auf diesen festen Einkuppelpunkt abgestimmte Lage der Wülste 10 und 11 tritt die Abbremsung des Hauptzylinderkolbens 2 immer im gleichen Hubbereich auf, wodurch die Steuerung in der beschriebenen Weise durch feste Kanten bzw. Wülste ermöglicht wird. Der geschwindigkeitsgedämpfte Einkuppelbereich ist somit unabhängig von der Abnutzung der Kupplungsbeläge.

Durch die Trennung der Servobetätigung in den relativ klein bauenden Nehmerzylinder 20 und den groß bauenden Geber 1 ist das Raumproblem im Fahrzeug gelöst, da der großbauende Geberzylinder an beliebiger Stelle im Fahrzeug angeordnet werden kann.

Infolge des Rückschlagventils 24 ist die Verlangsamung der Laufgeschwindigkeit des Hauptzylinderkolbens 2 nur in der Einkuppelrichtung wirksam. Es kann deshalb schnell ausgekuppelt werden.

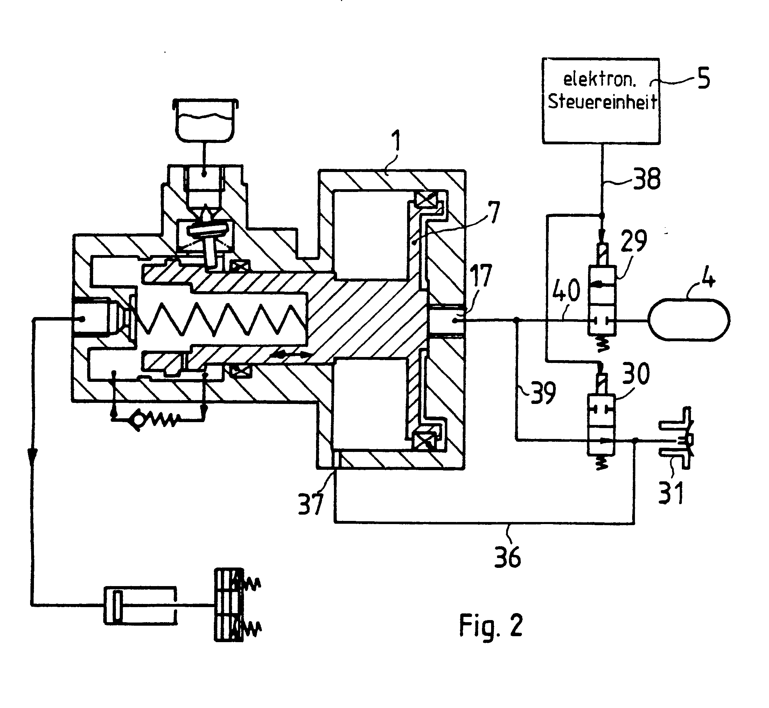

In Figur 2 ist eine Weiterbildung der Erfindung dargestellt, welche sich auf die pneumatische Ansteuerung des Gebers 1 bezieht.

Anstelle einer Entlüftungsbohrung 22 erfolgt hier die Entlüftung über eine Bohrung 37, die am äußersten linken Ende des pneumatischen Teils des Gebers 1 angeordnet ist. An die Bohrung 37 ist eine Leitung 36 angeschlossen, die in ein federbelastetes Entlüftungsventil 31 mündet. Die Belüftung des Anschlusses 17 des Gebers 1 erfolgt über ein 2/2-Wegeventil 29 und eine Leitung 40. Die Leitung 40 ist weiter über eine Leitung 39 und ein 2/2-Wegeventil 30 an das Entlüftungsventil 31 angeschlossen.

Zum Belüften wird die Ventilanordnung 29, 30 über eine Leitung 38 von der elektronischen Steuereinheit 5 gemeinsam angesteuert. Hierdurch wird die Vorderseite des Kolbens 7 belüftet. Der Kolben 7 bewegt sich nach links. Die auf der Hinterseite des Kolbens 7 befindliche Luft kann über die Bohrung 37, die Leitung 36 und das Entlüftungsventil 31 entweichen.

Bei einem Rücklauf des Kolbens 7 nach rechts entweicht die vor dem Kolben anstehende Druckluft über die Leitung 39 und das Ventil 30 sowie die Leitung 36 in den rückwärtigen Raum des Kolbens 7.

Durch die beschriebene Ventilanordnung wird verhindert, daß durch eine sonst erforderliche Atmungsbohrung verschmutzte Luft in den Rückraum des Kolbens 7 gelangen kann.

**Patentansprüche**

1. Selbstnachstellende Servobetätigung für eine Kupplung eines Kraftfahrzeugs, insbesondere Nutzfahrzeugs, mit folgenden Merkmalen:
   a) es ist ein Geber (1) mit einem hydraulisch arbeitenden Hauptzylinder (28) vorgesehen;
   b) der Hauptzylinder (28) weist eine Bremseinrichtung (10, 11) für den Hauptzylinderkolben (2) auf;
   c) an den Hauptzylinder (28) ist ein hydraulischer Nehmerzylinder (20) zur Betätigung der Kupplung (21) angeschlossen;
   gekennzeichnet durch folgende Merkmale:
   d) Die Bremseinrichtung (10, 11) besteht aus einer Wulst (11) am Hauptzylinderkolben (2) des Hauptzylinders (28), die zusammen mit einer Wulst (10) an der Innenseite des Hauptzylinders (28) eine dichte oder nahezu dichte Verbindung bildet, wodurch zur Verlangsamung des Hauptzylinderkolbens (2) ein mittels der Wülste (10, 11) abschließbarer Druckraum (27) gebildet wird, der sich bei Weiterlaufen des Hauptzylinderkolbens (2) in Schließrichtung der Kupplung (21) verkleinert;
   e) der abschließbare Druckraum (27) ist über eine Drosselbohrung (23) mit einem druckniedrigeren Raum (25) auf der Gegenseite der Wülste (10, 11) verbunden;
   f) der abschließbare Druckraum (27) ist mit dem druckniedrigeren Raum (25) über ein Rückschlagventil (24) so verbunden, daß ein Durchfluß von Hydraulikflüssigkeit vom Druckraum (27) in den druckniedrigeren Raum (25) gesperrt ist.

2. Servobetätigung nach Anspruch 1, dadurch gekennzeichnet, daß die Wülste (10, 11) so angeordnet sind, daß eine Bremsung des Hauptzylinderkolbens (2) im Bereich vom Einkuppelpunkt bis zum voll eingekuppelten Punkt der Kupplung (21) erfolgt.

3. Servobetätigung nach Anspruch 1 und 2, dadurch gekennzeichnet, daß der Hauptzylinderkolben (2) durch einen mit Druckluft beaufschlagbaren Kolben (7) betätigbar ist.

4. Servobetätigung nach Anspruch 3, dadurch gekennzeichnet, daß der rückseitige Raum des Kolbens (7) zur Entlüftung an ein federbelastetes Entlüftungsventil (31) angeschlossen ist.

5. Servobetätigung nach Anspruch 3 und 4, dadurch gekennzeichnet, daß der rückseitige Raum des Kolbens (7) zur Belüftung über ein 2/2-Wegeventil (30) an den vorderseitigen Raum des Kolbens (7) angeschlossen ist.

6. Servobetätigung nach Anspruch 3 bis 5, dadurch gekennzeichnet, daß zur Belüftung des vorderseitigen Raumes des Kolbens (7) ein zweites 2/2-Wegeventil (29) vorgesehen ist.

7. Servobetätigung nach Anspruch 3 bis 6, dadurch gekennzeichnet, daß die Wegeventile (29, 30) zur Umsteuerung des Gebers (1) durch eine elektronische Steuereinheit (5) ansteuerbar sind.

**Claims**

1. Self-adjusting servo control for a clutch of a motor vehicle, in particular a commercial vehicle, having the following features:
   a) a transmitter (1) with an hydraulically operating main cylinder (28) is provided;
   b) the main cylinder (28) has a braking means (10, 11) for the main cylinder piston (2);
   c) an hydraulic slave cylinder (20) for actuating the clutch (21) is connected to the main cylinder (28);
   characterised by the following features:
   d) the braking means (10, 11) consists of an enlargement (11) on the main cylinder piston (2) of the main cylinder (28), which enlargement, together with an enlargement (10) on the inside of the main cylinder (28), joins imperviously or virtually imperviously,
   whereby, by slowing down the main cylinder piston (2), there is formed a pressure chamber (27) which can be sealed off by the enlargements (10, 11) and which reduces in size as the main cylinder piston (2) runs further in the engaging direction of the clutch (21);
   e) the sealable pressure chamber (27) is connected by a throttling bore (23) to a chamber (25) of lower pressure on the opposite side of the enlargements (10, 11);
   f) the sealable pressure chamber (27) is so connected to the chamber (25) of lower pressure by way of a non-return valve (24) that a flow of hydraulic fluid from the pressure chamber (27) into the chamber (25) of lower pressure is blocked.

2. Servo control according to claim 1, characterized in that the enlargements (10, 11) are so arranged that a braking of the main cylinder piston (2) is effected in the region of the engagement point until the clutch (21) is fully engaged.

3. Servo control according to claim 1 and 2, characterized in that the main cylinder piston (2) can be actuated by a piston (7) to which compressed air may be applied.

4. Servo control according to claim 3, characterized in that, to discharge air, the rear chamber of the piston (7) is connected to a spring-loaded vent valve (31).

5. Servo control according to claim 3 and 4, characterized in that, for admission of air, the rear chamber of the piston (7) is connected by way of a two-position/two-way valve (30) to the front chamber of the piston (7).

6. Servo control according to claim 3 and 5, characterized in that, for admission of air to the front chamber of the piston (7), a second two-position/two-way valve (29) is provided.

7. Servo control according to claims 3 to 6, characterized in that the directional control valves (29, 30) can be triggered by an electronic control unit (5) to change over the transmitter (1).

**Revendications**

1. Servo-actionnement à réajustement automatique pour embrayage de véhicule automobile, notamment de véhicule utilitaire, comportant les caractéristiques suivantes:
   a) il est prévu un transmetteur (1) ayant un maître-cylindre (28) opérant hydrauliquement;
   b) ce maître-cylindre (28) présente un dispositif de freinage (10, 11) pour freiner le piston (2) du maître-cylindre;
   c) au maître-cylindre (28) est raccordé un cylindre récepteur hydraulique (20) pour actionner l'embrayage (21);
   caractérisé par les caractéristiques suivantes:
   d) le dispositif de freinage (10, 11) est constitué par un bourrelet (11) sur le piston (2) du maître-cylindre (28), bourrelet qui, en collaboration avec un bourrelet (10) sur le côté intérieur du maître-cylindre (28), forme un assemblage étanche ou presque étanche, ce qui a pour effet de former, pour ralentir le piston (2) du maître-cylindre, une chambre de pression (27) qui peut être fermée au moyen des bourrelets (10, 11) et qui se rétrécit lors de la poursuite du mouvement du piston (2) du maître-cylindre dans le sens correspondant à la fermeture de l'embrayage (21);
   e) par un trou d'étranglement (23), la chambre de pression pouvant être fermée (27) est reliée à une chambre à plus faible pression (25) du côté opposé des bourrelets (10, 11);
   f) la chambre de pression pouvant être fermée (27) est reliée à la chambre à plus faible pression (25) par une soupape antiretour (24) de façon à interdire un passage de fluide hydraulique de la chambre de pression (27) à la chambre à plus faible pression (25).

2. Servo-actionnement selon revendication 1, caractérisé par le fait que les bourrelets (10, 11) sont agencés de façon que le piston (2) du maître-cylindre soit freiné dans le domaine allant du point d'entrée en condition d'accouplement jusqu'au point d'accouplement complet de l'embrayage (21).

3. Servo-actionnement selon revendications 1 et 2, caractérisé par le fait que le piston (2) du maître-cylindre peut être actionné par un piston (7) apte à être sollicité par air comprimé.

4. Servo-actionnement selon revendication 3, caractérisé par le fait que la chambre située du côté arrière du piston (7) est raccordée, pour la mise à l'évent, à une soupape de mise à l'évent (31) chargée par ressort.

5. Servo-actionnement selon revendications 3 et 4, caractérisé par le fait que, pour le mouvement de l'air, la chambre située du côté arrière du piston (7) est reliée à la chambre située du côté avant du piston (7), cela par un distributeur à deux voies et deux positions (30).

6. Servo-actionnement selon revendications 3 à 5, caractérisé par le fait que, pour l'application d'air à la chambre située du côté avant du piston (7), il est prévu un deuxième distributeur à deux voies et deux position (29).

7. Servo-actionnement selon revendications 3 à 6, caractérisé par le fait que les distributeurs (29, 30) pour la commande d'inversion du transmetteur (1) peuvent être commandés par une unité de commande électronique (5).

Fig. 1

elektronische
Steuereinheit

0 158 004

elektron. Steuereinheit 5

Fig. 2

3